# EUROPEAN PATENT APPLICATION

(11) **EP 2 124 180 A1**
(43) Date of publication of application: **25.11.2009**
(21) Application number: 09382075.1
(22) Date of filing: 22.05.2009
(51) Int. Cl.: G06Q 30/00

(54) **Reprewin**

(30) Priority: 22.05.2008 ES 200801213
(71) Applicant: Sahagun de Castro, Tomas Jesus, 34004 Palencia (ES)
(72) Inventor: Sahagun de Castro, Tomas Jesus, 34004 Palencia (ES)

(57) **Abstract**

The invention is an online multicatalogue system that can be applied to all trades. It is thought to give new solutions to companies and their points of sale in order to substitute the traditional printed catalogues or brochures for the new **reprewin.** It consists in unifying all the information about the products from as many manufacturers as you want under a criterion, standardizing the insertion of images and data. It gives clients and sales representatives full details about the product: image, price, colour, serial number, options, technical data and alternatives to that shown on a screen and all of it easily and quickly updated by means of a software. With the help of this software we can manage stocks in store, sales and we can also issue expense vouchers, distribute catalogues and register orders.

## Description

### TECHNICAL SECTOR

The invention is included in the commercial sector and the management of sales techniques. It is presented as a software application designed to optimize this activity.

### THE TECHNIQUE NOWADAYS

At present, the manufacturers and the companies whose business activity is to sell products carry out the activity showing their products to potential customers. This is done in different ways: through catalogues, brochures or leaflets, which are sent by mail to the customers or they are presented to them by commercial agents or sales representatives and through virtual catalogues on Internet.

On this way different departments of the company are necessary to sell a product: the one that designs and distributes the catalogues and others that receive and make orders, manage stocks or calculate the profit margins and make out invoicing.

### EXPLANATION OF THE INVENTION

The way the products are presented by manufacturers and companies today, described above, requires a great technical and financial effort. Apart from the production of catalogues and brochures we have to bear in mind that these have to be always updated with new products or the latest innovations of those already on sale. All of it means money and long delays.

On the other hand, potential customers who want to purchase these products find that the information about them is spread out in different catalogues, which makes it difficult to choose the right product.

It would be desirable, therefore, to obtain a tool that makes it easier for manufacturers and companies to present their products to potential customers. This tool should combine the different actions carried out in the sales process.

The invention presented here unifies and standardizes all the processes inherent in the sale of any type of product of the different trades making these processes more modem, safer, faster and easier.

### CLAMS

It starts from a web server for five modules: factory, shop, terminal, shop window and administrator.

In the **factory module** we enter the catalogues on standard templates so that we can insert all data: photographs, images, videos, pages, articles, serial numbers, several options and one more option to send the catalogues to the chosen shops.

The **shop module** receives online, and always updated, the catalogues from the factory module. They can be personalized. It has different interfaces so that the user can sell the products easier; these are: graphic surfing searches through catalogues, pages, families,etc.

The **terminal module** is similar to the shop module but it cannot be personalized. However, it has the functionality of being able to be used directly by the final client by means of the touch screen and graphic and intuitive surfing through the different articles. He/she can also purchase a product or make a reservation.

The **shop window module** is similar to the terminal module but for the use of the people in general as a display screen with touch screen from outside the shop.

The **administrator module** is in charge of creating the different licenses for every client who acquires the service, no matter which trade he/she belongs to. It has several windows: the creation of new families and series ( issues ) and the administration ( management ) of the different clients who acquired the Reprewin system ( software ).

## Claims

1. The solution consists of a DOS application ( software ) built with:
- Programming Language PHP (5.0 version)
- Visual Programming Language. NET 2008
- Database Mysql (5.0 version)
- Microsoft database SQL.
It starts from a web server for five modules: factory, shop, terminal, shop window and administrator.
In the **factory module** we enter the catalogues on standard templates so that we can insert all data: photographs, images, videos, pages, articles, serial numbers, several options and one more option to send the catalogues to the chosen shops.
The **shop module** receives online, and always updated, the catalogues from the factory module. They can be personalized. It has different interfaces so that the user can sell the products easier; these are: graphic surfing searches through catalogues, pages, families,etc.
The **terminal module** is similar to the shop module but it cannot be personalized. However, it has the functionality of being able to be used directly by the final client by means of the touch screen and graphic and intuitive surfing through the different articles. He/she can also purchase a product or make a reservation.
The **shop window module** is similar to the terminal module but for the use of the people in general as a display screen with touch screen from outside the shop.
The **administrator module** is in charge of creating the different licenses for every client who acquires the service, no matter which trade he/she belongs to. It has several windows: the creation of new families and series ( issues ) and the administration ( management ) of the different clients who acquired the Reprewin system ( software ).
Hardware:
- CPU: Pentium IV or more.
- RAM memory: advisable 512 Mb on web server and 256 Mb on work stations.
- Video: advisable 64 independent Mb or more.
- Resolution: 990 x 660 or more.
- Screen ( monitor) : advisable touch or light pen.
- Sound: basic sound card.
